# EUROPEAN PATENT SPECIFICATION

(11) **EP 3 163 141 B1**
(45) Date of publication and mention of the grant of the patent: **23.05.2018**
(21) Application number: 16192903.9
(22) Date of filing: 07.10.2016
(51) Int. Cl.: F16L 19/028, F16L 23/00, F16L 23/028, F16L 23/16, F16L 35/00

(54) **PIPE CONNECTION ASSEMBLY WITH SPLASH AND ACCIDENT PROTECTION**
ROHRVERBINDUNGSANORDNUNG MIT SPRITZ- UND UNFALLSCHUTZ
ENSEMBLE RACCORD DE TUYAUX AVEC PROTECTION ANTI-ÉCLABOUSSURES ET CONTRE LES ACCIDENTS

(30) Priority: 30.10.2015 SE 1551408
(43) Date of publication of application: 03.05.2017
(73) Proprietor: Tetra Laval Holdings & Finance S.A., 1009 Pully (CH)
(72) Inventor: EGGLER, Thomas, 4852 Rothrist (CH)
(74) Representative: Tetra Pak - Patent Attorneys SE

(56) References cited:
- DE-A1-102014 204 565
- US-A- 2 318 466
- US-A- 2 634 812
- US-A- 4 280 723
- US-A- 4 422 674
- US-A1- 2006 157 592
- US-A1- 2010 264 647

## Description

### Technical field

The invention relates to the field of liquid transportation by means of pipes, particularly to a pipe connection assembly according to claim 1.

### Background

Pipe connections, particularly pipe unions are known. A pipe union is one of multiple ways of connecting mating ends of two pipes. One of the pipes has a male end and the other pipe has a female end. These ends are joined by means of a nut which provides the necessary pressure to seal the joint between the pipes. Generally said, pipe unions are a type of flange connection. DE 10 2014 204565 A1 discloses a pipe connection assembly according to the preamble of claim 1. An advantage of pipe unions is that the connection between the pipes can be undone very fast.

Such pipe unions are e.g. used in cleaning-in-place (CIP) pipe unions of food processing installations.

A disadvantage of said standard solution for pipe unions is that the liquid in the pipes may splash when the connection is undone by turning the nut. In case of CIP pipe unions it is possible that the pipes have hydrostatic pressure even during production. When opening the pipe union by untightening the nut, CIP solution or other liquids splash out of the pipe at the location of the pipe union due to said hydrostatic pressure. Particularly at the beginning of the nut untightening action the splash comes out with high pressure, as the escape opening is still very small (nut not fully untightened) in relation to the hydrostatic pressure. As a result, the liquid in the pipes splashes almost radially with respect to the pipe longitudinal axis. This is undesired due to work safety, as e.g. the CIP solution may be a caustic solution potentially causing severe damage to skin or particularly to the eyes when this solution splashes onto an operator.

This disadvantage could be decreased by using a valve inside the pipes. However, such a solution would be comparatively very expensive and therefore not practicable.

### Description of the invention

It is therefore an objective of the present invention to improve work safety at pipe unions and at the same time to keep costs for pipe unions low.

The objective is solved by the independent claim with a pipe connection assembly comprising a first pipe which is detachably connectable to a second pipe in a fluid-tight manner and such that the two pipes have a common longitudinal axis. The first pipe comprises a first flange with an outer thread at its connection-side extremity and the second pipe comprises a second flange at its connection-side extremity. The pipe connection assembly further comprises a connection element having a nut for engaging the outer thread of the first pipe, a first spray guard element connected to the nut on the side of the first pipe and a second spray guard element connected to the nut on the side of the second pipe. The nut has an abutment ring on the side of the second pipe, which engages the second flange when the first and the second pipe are attached to one another. The first spray guard element and the second spray guard element are elongated, each spray guard element enclosing at least a portion of the respective pipe and defining a chamber with said portion. The chamber has an opening at a free end of the respective spray guard element. At least one of the spray guard elements comprises a first stopper element arranged in such a way that it reduces a cross-section of the opening of the chamber.

The pipe connection assembly is preferably used in pipe unions, particularly in the food industry, particularly in CIP-piping.

The present solution minimizes the danger of liquid splashing by providing the spray guard elements which prevent the liquid from splashing in the way described above (almost radially) and the first stopper element or elements, which reduce the cross section of the chamber formed by the pipe sections and the spray guard elements and slows down the liquid. The present solution has the effect that the liquid only splashes in a direction almost parallel to the longitudinal axis of the pipes. In other words, the liquid pours on the outside walls of the pipes. Therefore, the risk that the operator receives a liquid jet e.g. in the eyes is minimized.

### Short description of the drawings

Embodiments, advantages and applications of the invention result from the dependent claims and from the now following description by means of the figures. It is shown in:
Fig. 1 a perspective view of a pipe connection assembly according to the invention, and
Fig. 2 a section side view of the pipe connection assembly of Fig. 1.

### Ways of carrying out the invention

In the following same reference numerals denote structurally or functionally same elements of the various embodiments of the invention.

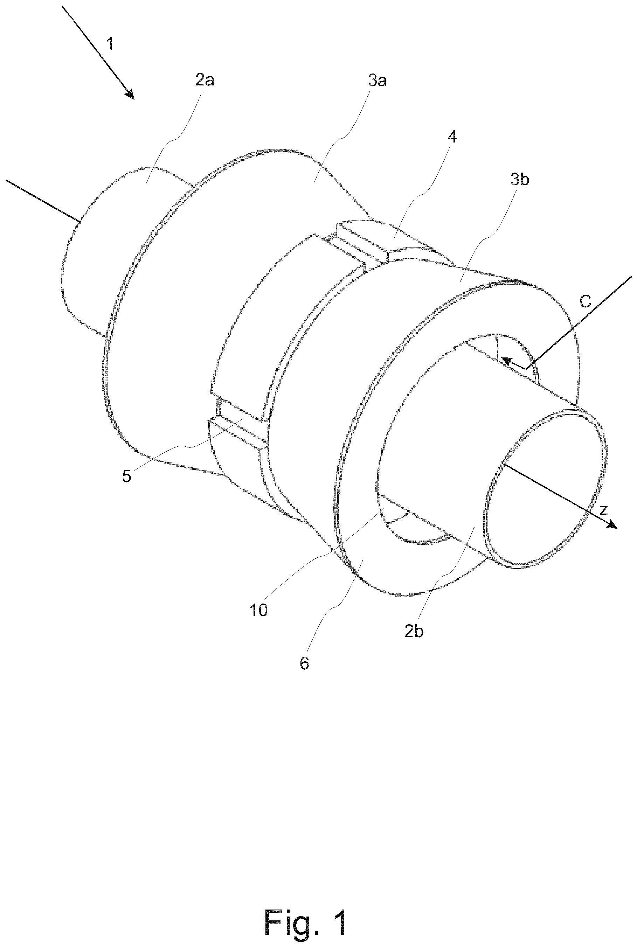

Fig. 1 shows a perspective view of a pipe connection assembly 1 according to the invention. It comprises a first pipe 2a and a second pipe 2b which are detachably connectable to one another in a fluid-tight manner. The two pipes 2a, 2b have a common longitudinal axis z. The pipe connection assembly further comprises a connection element 3a, 3b, 4 having a nut 4 for tightening and untightening the connection between the two pipes 2a, 2b. A first spray guard element 3a is connected to the nut 4 on the side of the first pipe 2a and a second spray guard element 3b is connected to the nut 4 on the side of the second pipe 2b. The first spray guard element 3a and the second spray guard element 3b are elongated and each spray guard element 3a, 3b encloses a portion of the respective pipe 2a, 2b and defines a chamber C with said portion. The chamber C has an opening 11 at a free end of the respective spray guard element 3a, 3b. The opening 11 is understood as being formed by the front edges of the spray guard elements and the respective pipe.

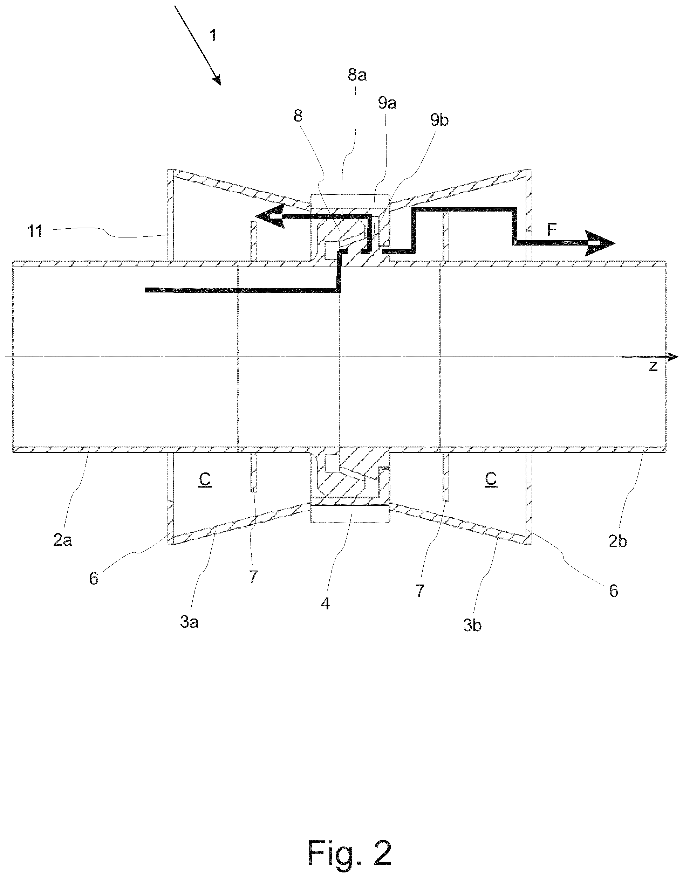

At least one of the spray guard elements 3a, 3b comprises a first stopper element 6 arranged in such a way that it reduces a cross-section of the opening 11 of the chamber C. In the present exemplary embodiment both spray guard elements 3a, 3b comprise a first stopper element 6, as can be best seen in Fig. 2. The first stopper element 6 is a stopper ring. It is preferred that the stopper ring is a washer-shaped stopper ring, in other words a disk shaped ring.

In another preferred embodiment only the first spray guard element 3a comprises the first stopper element 6. This is due to the fact that the liquid splashes more powerfully on the side of the first spray guard element 3a due to the threading connection between the nut 4 and the first pipe 2a, that is due to the inclination of the thread. In other words, the first stopper element 6 should be at least arranged on the side defined by the tightening direction of the thread at 8a.

The nut has grooves 5 on the outside, serving for clamping a suitable tool therein in order to facilitate tightening and untightening the nut 4.

Fig. 2 shows a sectional side view of the pipe connection assembly 1 of Fig. 1. The first pipe 2a comprises a first flange 8 with an outer thread at its connection-side extremity. The outer thread of the first pipe 2a engages an inner thread of the nut 4 at 8a. The second pipe 2b comprises a second flange 9a at its connection-side extremity. The first flange 8 and the second flange 9a have each a cone-shaped surface such that the second flange 9a can be inserted to a certain extent into the first flange 8.

The nut 4 has an abutment ring 9b on the side of the second pipe 2b, which engages the second flange 9a when the first and the second pipe 2a, 2b are attached to one another. When tightening the connection at 8b the nut 4 travels in the direction of the first pipe 2a and its abutment ring 9b presses on a mating surface of the flange 9a, thereby dragging the second pipe 2b towards the first pipe 2a such that the second flange 9a enters the first flange 8, as can be seen in Fig. 2.

The pipes 2a, 2b comprise each a second stopper element 7 protruding inside the respective chamber C. Preferably, the second stopper elements 7 are stopper rings, preferably washer-shaped stopper rings 7. In other embodiments only one of the pipes comprises a second stopper element 7, preferably the second pipe 2b, due to the reasons mentioned in connection with the description of the first stopper rings 6.

It is preferred to arrange the first stopper element or elements 6 and/or the second stopper element or elements 7 perpendicular to the pipe walls, which makes manufacturing easier.

Preferably, the spray guard elements 3a, 3b are cone-shaped, with their cross-section decreasing towards the nut 4. This shape increases the volume of chamber C, e.g. as compared to a tubular shape and therefore contributes to slowing down the liquid prior to the liquid's escape from the chambers C through the openings 11. However it is understood that other shapes are also possible.

The first stopper element or elements 6 is/are attached on a front end or front ends, respectively, of the respective spray guard element or elements 3a, 3b such that the volume of chamber C is maximized.

It is noted that the spray guard elements 3a, 3b may be manufactured with the first stopper elements 6 or the first stopper elements 6 may subsequently be welded on existing spray guard elements. In this context it is also noted that existing solutions can be easily replaced by the present solution simply by exchanging the simple nuts used until now with the connection element.

In embodiments, the spray guard elements 3a, 3b are detachable from the nut 4 and may be replaced with spray guard elements 3a, 3b with different shapes and dimensions.

It is understood that the diameters of the connection element formed by the nut 4 and the spray guard elements 3a, 3b may vary depending on the required pipe diameter for a particular installation.

In embodiments, the spray guard elements 3a, 3b may have auxiliary stopper elements (not shown) protruding inside the respective chamber C. These elements may be regarded as similar in shape to the first stopper elements 6, optionally being perforated such that liquid can pass through the perforations. The purpose of such auxiliary elements will be explained in the following in connection with the liquid's path towards the opening 11.

The liquid's path towards the opening 11 is shown schematically by arrows F. When untightening the connection by rotating the nut 4 towards the second pipe 2b, the engagement between the flange 9a of the second pipe 2b and the abutment ring 9b is cancelled, such that liquid may flow through the emerging gap between said elements. At first, the abutment ring 9b forms an obstacle for the liquid to pass in the direction of the second pipe 2b and finds its way towards the thread, from where it splashes with high pressure into the chamber C on the side of the first pipe 2a. Due to this reason the measures described above should particularly be applied on the side of the first pipe 2a. On the side of the second pipe 2b the liquid enters chamber C through the gap between the abutment ring 9b and a shoulder of the flange 9a or the second pipe 2b itself, as the case may be. On both sides, the liquid has to travel through a "labyrinth" until it finds its way out through the openings 11. The labyrinth is created by the first and the second stopper elements 6 and 7. This labyrinth creates high turbulences in the chamber C and therefore slows down the liquid passing through the chamber C. The liquid is forced to exit the chamber C through the narrowed opening 11 in a direction substantially parallel to the longitudinal axis z, therefore minimizing the risk of splashing towards an operator.

The chambers C particularly help minimizing the effect of the splash at the beginning of the untightening procedure of the pipe union. This is due to the fact that during this period the liquid splashes through initially very small gaps which have just been formed by the initiating untightening. As the gaps are still small and the exit pressure of the liquid is high, the liquid would splash very fast and very far. However, by using the connection element, the liquid is prevented from reaching the outside for this particularly dangerous phase, but it first accumulates in the chamber C. As the connection of the pipe union is further untightened, the exit pressure of the liquid decreases, such that it substantially flows out of the opening 11 instead of spraying out.

By using the present pipe connection assembly it is possible to minimize risks of injuries for operators dealing with pipe unions, whereas prescribed precautions should still be observed by personnel. At the same time, the ease of tightening/untightening of the pipe union, which is its biggest advantage, is preserved.

While there are shown and described presently preferred embodiments of the invention, it is to be distinctly understood that the invention is not limited thereto but may otherwise variously be embodied and practised according to the following claims. Therefore, terms like "preferred" or "in particular" or "particularly" or "advantageously", etc. signify optional and exemplary embodiments only.

## Claims

1. A pipe connection assembly (1) comprising a first pipe (2a) and a second pipe (2b) which is detachably connectable to the first pipe (2a) in a fluid-tight manner and such that the first and the second pipe (2a, 2b) have a common longitudinal axis (z), wherein the first pipe (2a) comprises a first flange (8) with an outer thread (8a) at its connection-side extremity and the second pipe (2b) comprises a second flange (9a) at its connection-side extremity,
further comprising a connection element having
- a nut (4) for engaging the outer thread of the first pipe (2a), wherein the nut (4) has an abutment ring (9b) on the side of the second pipe (2b), which engages the second flange (9a) when the first and the second pipe (2a, 2b) are attached to one another, the pipe connection assembly being **characterized in that** it further comprises
- a first spray guard element (3a) connected to the nut (4) on the side of the first pipe (2a) and a second spray guard element (3b) connected to the nut (4) on the side of the second pipe (2b), wherein the first spray guard element (3a) and the second spray guard element (3b) are elongated, each spray guard element (3a, 3b) enclosing at least a portion of the respective pipe (2a, 2b) and defining a chamber (C) with said portion, wherein the chambers (C) have each an opening (11) at a free end of the respective spray guard element (3a, 3b), wherein at least one of the spray guard elements (3a, 3b) comprises a first stopper element (6) arranged in such a way that it reduces a cross-section of the opening (11) of the chamber (C).

2. The pipe connection assembly according to claim 1, wherein the first stopper element (6) is a stopper ring, particularly a washer-shaped stopper ring.

3. The pipe connection assembly according to claim 1 or 2, wherein the first spray guard element (3a) comprises the first stopper element (6), particularly wherein both spray guard elements (3a, 3b) comprise each a first stopper element (6).

4. The pipe connection assembly according to one of the preceding claims, wherein at least one of the pipes (2a, 2b) comprises a second stopper element (7) protruding inside the respective chamber (C), particularly wherein the second stopper element (7) is a stopper ring, particularly a washer-shaped stopper ring.

5. The pipe connection assembly according to claim 4, wherein the first stopper element or elements (6) and/or the second stopper element or elements (7) is/are arranged perpendicular to the pipe walls.

6. The pipe connection assembly according to one of the preceding claims, wherein the spray guard elements (3a, 3b) are cone-shaped with their cross-section decreasing towards the nut (4).

7. The pipe connection assembly according to one of the preceding claims, wherein the first stopper element or elements (6) is/are attached on a front end or front ends, respectively, of the respective spray guard element or elements (3a, 3b).

8. The pipe connection assembly according to one of the preceding claims, wherein at least one of the spray guard elements (3a, 3b) has auxiliary stopper elements protruding inside the respective chamber (C).

9. The pipe connection assembly according to one of the preceding claims, wherein the spray guard elements (3a, 3b) are detachable from the nut (4), particularly wherein the spray guard elements (3a, 3b) are replaceable by spray guard elements with different shapes and dimensions.

10. Use of the pipe connection assembly (1) according to one of the preceding claims in pipe unions, particularly in the food industry, particularly in cleaning-in-place piping.

## Patentansprüche

1. Rohrverbindungsanordnung (1), aufweisend ein erstes Rohr (2a) und ein zweites Rohr (2b), welches an dem ersten Rohr (2a) in einer fluiddichten Weise abnehmbar verbindbar ist, und derartig, dass das erste und das zweite Rohr (2a, 2b) eine gemeinsame, longitudinale Achse (z) aufweisen, wobei das erste Rohr (2a) einen ersten Flansch (8) mit einem äußeren Gewinde (8a) an seinem Verbindungsseitenende aufweist und die zweite Leitung (2b) einen zweiten Flansch (9a) an seinem Verbindungsseitenende aufweist,
weiter aufweisend ein Verbindungselement, aufweisend
- eine Mutter (4) zum Eingreifen mit dem äußeren Gewinde des ersten Rohrs (2a), wobei die Mutter (4) einen Anlagering (9b) auf der Seite des zweiten Rohrs (2b) aufweist, welcher mit dem zweiten Flansch (9a) in Eingriff gelangt, wenn das erste und das zweite Rohr (2a, 2b) miteinander befestigt sind,
wobei die Rohrverbindungsanordnung **dadurch gekennzeichnet ist, dass** sie weiter aufweist
- ein erstes Spritzschutzelement (3a), welches mit der Mutter (4) auf der Seite des ersten Rohrs (2a) verbunden ist, und ein zweites Spritzschutzelement (3b), welches mit der Mutter (4) auf der Seite des zweiten Rohrs (2b) verbunden ist, wobei das erste Spritzschutzelement (3a) und das zweite Spritzschutzelement (3b) lang gestreckt sind, wobei jedes Spritzschutzelement (3a, 3b) mindestens einen Abschnitt des jeweiligen Rohrs (2a, 2b) umschließt und eine Kammer (C) mit diesem Abschnitt definiert, wobei die Kammern (C) jeweils eine Öffnung (11) an einem freien Ende des jeweiligen Spritzschutzelements (3a, 3b) aufweisen, wobei mindestens eines der Spritzschutzelemente (3a, 3b) ein erstes Verschlusselement (6) aufweist, welches derartig angeordnet ist, dass es einen Querschnitt der Öffnung (11) der Kammer (C) verringert.

2. Rohrverbindungsanordnung nach Anspruch 1, wobei das erste Verschlusselement (6) ein Verschlussring ist, insbesondere ein Verschlussring in Form einer Unterlegscheibe.

3. Rohrverbindungsanordnung nach Anspruch 1 oder 2, wobei das erste Spritzschutzelement (3a) das erste Verschlusselement (6) aufweist, insbesondere wobei beide Spritzschutzelemente (3a, 3b) jeweils ein erstes Verschlusselement (6) aufweisen.

4. Rohrverbindungsanordnung nach einem der vorhergehenden Ansprüche, wobei mindestens eines der Rohre (2a, 2b) ein zweites Verschlusselement (7) aufweist, welches innerhalb der entsprechenden Kammer (C) vorspringt, insbesondere wobei das zweite Verschlusselement (7) ein Verschlussring ist, insbesondere ein Verschlussring in Form einer Unterlegscheibe.

5. Rohrverbindungsanordnung nach Anspruch 4, wobei das erste Verschlusselement oder -elemente (6) und/oder das zweite Verschlusselement oder -elemente (7) senkrecht zu den Rohrwänden angeordnet ist/sind.

6. Rohrverbindungsanordnung nach einem der vorhergehenden Ansprüche, wobei die Spritzschutzelemente (3a, 3b) kegelförmig sind, wobei ihr Querschnitt in Richtung auf die Mutter (4) abnimmt.

7. Rohrverbindungsanordnung nach einem der vorhergehenden Ansprüche, wobei das erste Verschlusselement oder -elemente (6) an einem vorderen Ende oder vorderen Enden des/der entsprechenden Spritzschutzelements oder -elemente (3a, 3b) befestigt ist/sind.

8. Rohrverbindungsanordnung nach einem der vorhergehenden Ansprüche, wobei mindestens eines der Spritzschutzelement (3a, 3b) Hilfsverschlusselemente aufweist, welche innerhalb der entsprechenden Kammer (C) vorspringen.

9. Rohrverbindungsanordnung nach einem der vorhergehenden Ansprüche, wobei die Spritzschutzelemente (3a, 3b) von der Mutter (4) abnehmbar sind, insbesondere wobei die Spritzschutzelemente (3a, 3b) durch Spritzschutzelemente mit unterschiedlichen Formen und Abmessungen austauschbar sind.

10. Verwendung der Rohrverbindungsanordnung (1) nach einem der vorhergehenden Ansprüche bei Rohrverbindungen, insbesondere in der Lebensmittelindustrie, insbesondere bei ortsgebundener Reinigung von Rohrleitungen.

## Revendications

1. Ensemble raccord de tuyaux (1) comprenant un premier tuyau (2a) et un second tuyau (2b) qui peut être raccordé amovible au premier tuyau (2a) de manière étanche aux fluides et de sorte que le premier et le second tuyau (2a, 2b) aient un axe longitudinal (z) commun, le premier tuyau (2a) comprenant une première bride de tuyau (8) avec un filetage externe (8a) au niveau de son extrémité côté raccord, et le second tuyau (2b) comprenant une seconde bride (9a) au niveau de son extrémité côté raccord,
comprenant en outre un élément de raccord comportant
un écrou (4) capable de se solidariser au filetage externe du premier tuyau (2a), l'écrou (4) comportant une bague de butée (9b) sur le côté du second tuyau (2b), qui vient en butée contre la seconde bride (9a) quand le premier et le second tuyau (2a, 2b) sont raccordés l'un à l'autre,
l'ensemble raccord de tuyaux étant **caractérisé en ce qu'**il comprend en outre
un premier élément de protection contre les pulvérisations (3a) raccordé à l'écrou (4) sur le côté du premier tuyau (2a) et un second élément de protection contre les pulvérisations (3b) raccordé à l'écrou (4) sur le côté du second tuyau (2b), le premier élément de protection contre les pulvérisations (3a) et le second élément de protection contre les pulvérisations (3b) étant allongés, chaque élément de protection contre les pulvérisations (3a, 3b) enfermant au moins une partie du tuyau respectif (2a, 2b) et définissant une chambre (C) avec ladite partie, les chambres (C) comportant chacune une ouverture (11) au niveau d'une extrémité libre de l'élément de protection contre les pulvérisations (3a, 3b) respectif, au moins un des éléments de protection contre les pulvérisations (3a, 3b) comprenant un premier élément d'arrêt (6) conçu de manière à réduire une section transversale de l'ouverture (11) de la chambre (C).

2. Ensemble raccord de tuyaux selon la revendication 1, dans lequel le premier élément d'arrêt (6) est une bague d'arrêt, en particulier une bague d'arrêt en forme de rondelle.

3. Ensemble raccord de tuyaux selon la revendication 1 ou 2, dans lequel le premier élément de protection contre les pulvérisations (3a) comprend le premier élément d'arrêt (6), en particulier dans lequel les deux éléments de protection contre les pulvérisations (3a, 3b) comprennent chacun un premier élément d'arrêt (6).

4. Ensemble raccord de tuyaux selon l'une quelconque des revendications précédentes, dans lequel au moins un des tuyaux (2a, 2b) comprend un second élément d'arrêt (7) faisant saillie à l'intérieur de la chambre (C) respective, en particulier dans lequel le second élément d'arrêt (7) est une bague d'arrêt, en particulier une bague d'arrêt en forme de rondelle.

5. Ensemble raccord de tuyaux selon la revendication 4, dans lequel le ou les premiers éléments d'arrêt (6) et/ou le ou les seconds éléments d'arrêt (7) sont disposés perpendiculairement aux parois de tuyau.

6. Ensemble raccord de tuyaux selon l'une quelconque des revendications précédentes, dans lequel les éléments de protection contre les pulvérisations (3a, 3b) sont en forme de cône, leur section transversale étant décroissante vers l'écrou (4).

7. Ensemble raccord de tuyaux selon l'une quelconque des revendications précédentes, dans lequel le ou les premiers éléments d'arrêt (6) est ou sont fixés sur une ou des extrémités avant, respectivement, du ou des éléments de protection contre les pulvérisations (3a, 3b).

8. Ensemble raccord de tuyaux selon l'une quelconque des revendications précédentes, dans lequel au moins un des éléments de protection contre les pulvérisations (3a, 3b) comporte des éléments d'arrêt auxiliaires faisant saillie à l'intérieur de la chambre (C) respective.

9. Ensemble raccord de tuyaux selon l'une quelconque des revendications précédentes, dans lequel les éléments de protection contre les pulvérisations (3a, 3b) peuvent être séparés de l'écrou (4), en particulier dans lequel les éléments de protection contre les pulvérisations (3a, 3b) sont remplaçables par des éléments de protection contre les pulvérisations ayant différentes formes et dimensions.

10. Utilisation de l'ensemble raccord de tuyaux (1) selon l'une quelconque des revendications précédentes dans des jonctions de tuyauterie, en particulier dans l'industrie alimentaire, en particulier dans une tuyauterie de nettoyage en place.
